**Europäisches Patentamt**

**European Patent Office**

**Office européen des brevets**

(19)

(11) Veröffentlichungsnummer: **0 230 594 B1**

# (12) EUROPÄISCHE PATENTSCHRIFT

(45) Veröffentlichungstag der Patentschrift:
**03.10.90**

(51) Int. Cl.⁵: **F24H 1/28**

(21) Anmeldenummer: **86117309.4**

(22) Anmeldetag: **12.12.86**

(54) Kondensatheizkessel.

(30) Priorität: **25.01.86 DE 8601896 U**

(43) Veröffentlichungstag der Anmeldung:
**05.08.87 Patentblatt 87/32**

(45) Bekanntmachung des Hinweises auf die Patenterteilung:
**03.10.90 Patentblatt 90/40**

(84) Benannte Vertragsstaaten:
**AT BE CH DE FR LI LU NL**

(56) Entgegenhaltungen:
**DE-U- 8 510 098**
**US-A- 2 546 082**

(73) Patentinhaber: **Viessmann, Hans, Dr., Im Hain 24, D-3559 Battenberg/Eder(DE)**

(72) Erfinder: **Viessmann, Hans, Dr., Im Hain 24, D-3559 Battenberg/Eder(DE)**

(74) Vertreter: **Wolf, Günter, Dipl.Ing., Patentanwälte Dipl.-Ing. Amthor Dipl.-Ing. Wolf Postfach 70 02 45 An der Mainbrücke 16, D-6450 Hanau 7(DE)**

ACTORUM AG

**Beschreibung**

Die Erfindung betrifft einen Kondensatheizkessel gemäß Oberbegriff des Anspruches 1.

Derartige Kondensatheizkessel sind bspw. nach dem DE-GM 85 10 098 bekannt. Kondensatheizkessel dieser Art, die auch als Brennwertkessel bezeichnet werden, sind auch in anderen Ausführungsformen bekannt geworden und unterscheiden sich von "normalen" Heizkesseln bezüglich ihrer Betriebsweise dadurch, daß die Heizgase gezielt bis zur Kondensation heruntergekühlt werden. Dafür ist es notwendig, für den erforderlichen Wärmetausch große bzw. lange Wärmetauschflächen zur Verfügung zu stellen. Bei bekannten Kondensatheizkesseln erfolgt dies durch den Einbau von Heizgaszugrohren, die zudem noch in der Regel schraubenlinienförmig gewendelt sind, um lange Strömungswege für die Heizgase zu schaffen. Bekannt ist auch bspw. nach dem obengenannten DE-GM, die Brennkammer mit der Kondensatsammelkammer durch vertikal orientierte, taschenartige Heizgaszüge zu verbinden, die in relativ großer Zahl in entsprechenden Öffnungen des Brennkammerbodens und der oberen Begrenzungswand der Kondensatsammelkammer eingeschweißt werden müssen. Um dafür günstige Anschlußverhältnisse zu erhalten, wird deshalb der betreffende Anschlußwandbereich der Brennkammer ebenflächig bzw. angenähert ebenflächig angelegt, was natürlich ungünstiger ist, als eine solche Brennkammer einfach zylindrisch ausbilden zu können. Abgesehen davon stellt das Einschweißen einer Vielzahl von Einzeltaschen, die die Heizgaszüge bilden sollen, einen beträchtlichen und umständlichen Fertigungsaufwand dar. Bei vertikal orientierten Brennkammern für die Verwendung von Sturzbrennern ergibt sich zwar ohne weiteres ein ebenflächiger Anschlußboden für die Heizgaszüge, da hierbei aber die Brennkammer vertikal orientiert ist, geht diese Anordnung auf Kosten vergrößerter Höhenabmessungen derartiger Kessel. Vorzuziehen wäre also die Verwendung einer einfach herzustellenden, zylindrischen Brennkammer in Horizontalanordnung über den Heizgaszügen, da dies Bauhöhe einspart, wodurch allerdings die Anschlußverhältnisse für die einzelnen Heizgaszugtaschen, die in kompakter Anordnung die Unterbringung einer relativ großen Wärmetauschfläche gewährleisten, wesentlich erschwert wird. Die Heizgastaschen müssen dann nämlich seitlich an die zylindrische Wand der Brennkammer angeschlossen werden, was aber bedeutet, daß die Taschen untereinander, soweit sie nicht in einer Reihe nebeneinander liegen, unterschiedliche Längen haben müssen und außerdem unterschiedliche Anschlußkonturen in bezug auf den Brennkammerzylinder.

Der Erfindung liegt demgemäß die Aufgabe zugrunde, einen Kondensatheizkessel der eingangs genannten Art dahingehend zu verbessern, daß der Fertigungs- und Montageaufwand für den Heizkessel, insbesondere aber hinsichtlich der Heizgaszüge bei kompakter Bauweise wesentlich reduziert und vereinfacht werden kann.

Diese Aufgabe ist mit einem Kondensatheizkessel der eingangs genannten Art nach der Erfindung durch die im Kennzeichen des Hauptanspruches angeführten Merkmale gelöst. Vorteilhafte Weiterbildungen ergeben sich nach den Unteransprüchen.

Bei dieser erfindungsgemäßen Ausbildung des Kondensatheizkessels erstrecken sich die vertikal orientierten Heizgaszüge senkrecht bzw. angenähert senkrecht zur Längsachse der darüber angeordneten zylindrisch ausgebildeten Brennkammer. Die vorerwähnte Schwierigkeit bezüglich des Anschlusses der Heizgaszüge an die zylindrische Wand der Brennkammer ist dadurch behoben, daß die Heizgaszüge in Form eines Taschenblockes ausgebildet sind, der in sich eine komplett vorfertigbare Einbaukomponente für den Kessel darstellt. Dadurch ist es nicht mehr notwendig, die Brennkammerwand mit einer Vielzahl von Einzelöffnungen für den Anschluß von Einzelheizgaszügen zu versehen, sondern im entsprechenden, nach unten gerichteten Wandbereich der zylindrischen Brennkammer muß nur ein entsprechend großer, je nach Form des Taschenblockes bspw. rechteckiger Ausschnitt vorgesehen werden, was praktisch auch für die entsprechende Anschlußdeckwand der Kondensatsammelkammer gilt. Da im Taschenblock, was noch näher erläutert wird, eine beträchtliche Anzahl von parallel zueinander verlaufenden Einzeltaschen angeordnet werden können, ist vorteilhaft bei kompakter Bauweise problemlos die erforderliche Größe von Wärmetauschflächen im Kessel unterzubringen. Der Taschenanschlußbereich kann sich dabei praktisch über ca. zwei Drittel der gesamten Länge der Brennkammer erstrecken.

Die Zusammenfügung des Taschenblockes aus einer entsprechenden Anzahl entsprechend vorgeprägter Blechschalen ist selbstverständlich mit einem entsprechenden Schweißaufwand verbunden, der jedoch deshalb in einem vertretbaren Rahmen bleibt, weil der Taschenblock zunächst als völlig separate Einbaukomponente erstellt werden kann, der dann lediglich beim Zusammenfügen des ganzen Kessels mit den entsprechenden Öffnungsrandbereichen an der zylindrischen Brennkammer und der Kondensatsammelkammer zu verbinden ist, wobei die Schweißbereiche problemlos zugänglich sind.

Da die Einzelbleche zum Zusammenfügen des Taschenblockes sowieso einer vorbereitenden Vorprägung bedürfen, werden die Wände der Zugtaschen vorteilhaft in bekannter Weise mit nach innen gerichteten Rippen- bzw. Wellenprägungen versehen, was gleichzeitig mit der Zurichtung der Bleche bewirkt werden kann.

Eine weitere vorteilhafte Ausbildung besteht darin, daß die Zugtaschen in sich durch vertikale und nach innen gerichtete Längsprägungen in mehrere Einzelzüge gegliedert sind, wobei die Längsprägungen ebenfalls bei der vorbereitenden Zurichtung mit angebracht werden. Diese Ausführungsform der Taschen bzw. des Taschenblockes führt letztlich wieder zu einer Aufgliederung der einzelnen Taschenzüge in Einzelheizgaszüge, wie sie beim Kondensatheizkessel nach dem eingangs erwähnten DE-GM 85 10 098 vorgesehen sind, allerdings ohne den Nachteil, daß die Einzelheizgaszüge eines Einzelanschlusses an die betreffenden Anschlußwände bedürfen. Die gesamte Anschlußseite des Taschenblockes zur Brennkammer hin entspricht natürlich ebenfalls einem Teilzylinder, was den Vorteil hat, daß der zylindrische Innenraum der Brennkammer frei von Vorsprüngen bleibt und daß ggf. schon in der Brennkammer entstandenes Kondensat problemlos in die Heizgaszugtaschen einfließen kann.

Der erfindungsgemäße Kondensatzheizkessel wird nachfolgend anhand der zeichnerischen Darstellung eines Ausführungsbeispieles näher erläutert.

Es zeigt schematisch

Fig. 1 einen Längsschnitt durch den Kondensatheizkessel;

Fig. 2 einen Schnitt durch den Kondensatzheizkessel längs Linie II-II in Fig. 1;

Fig. 3 einen Schnitt durch den Kondensatheizkessel längs Linie III-III in Fig. 2 und

Fig. 4 perspektivisch den Taschenblock.

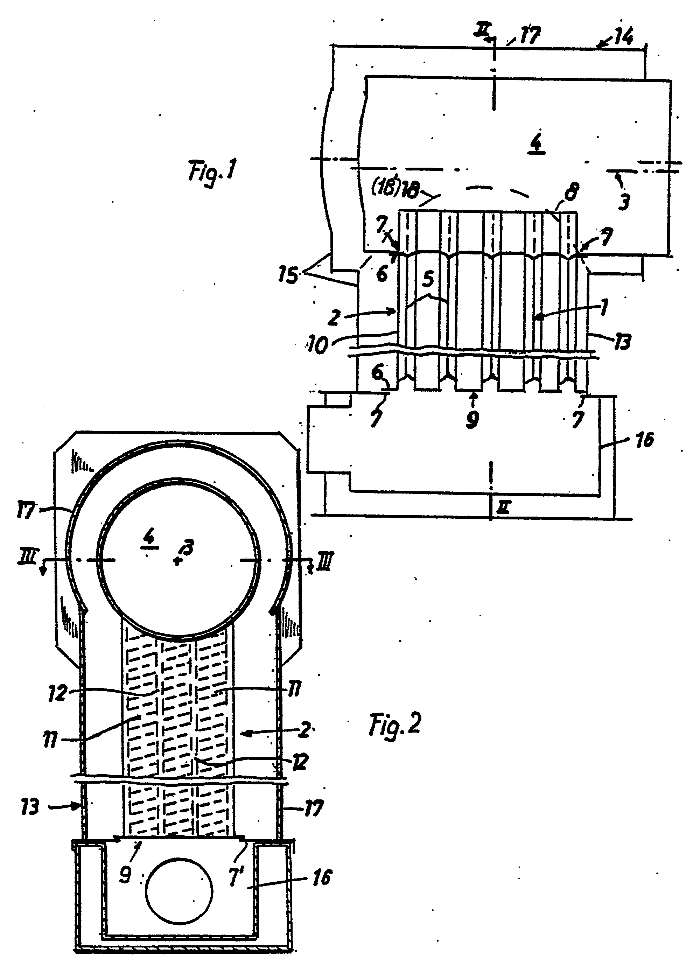

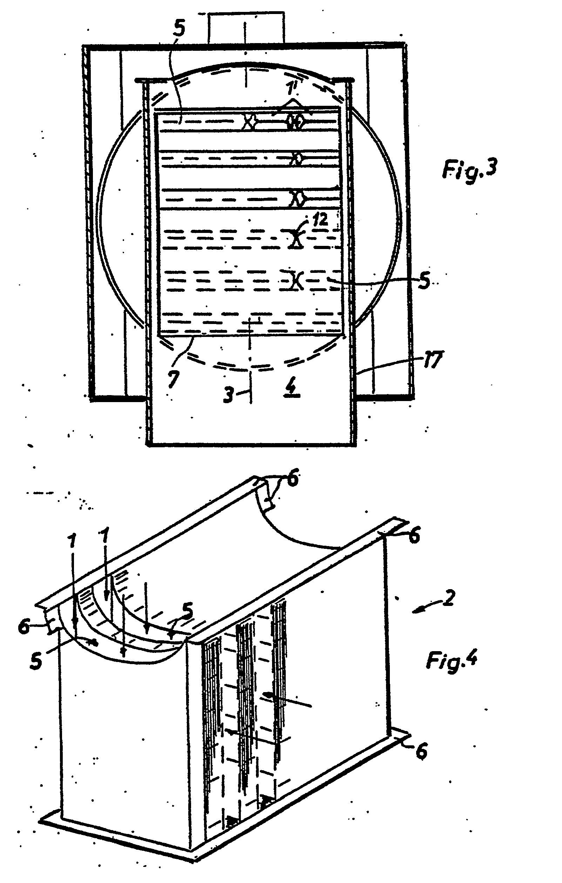

Wie aus den Fig. 1, 2 erkennbar, besteht der Kondensatheizkessel aus einem wasserführenden Gehäuse 15 mit im Oberteil angeordneter, im wesentlichen horizontal orientierter Brennkammer 4, von der taschenartige Heizgaszüge 1 zur unter dem wasserführenden Gehäuse 15 angeordneten Kondensatsammelkammer 16 geführt sind. Die Heizgaszüge 1 sind in Form eines Taschenblockes 2 zusammengefaßt, der als vorfertigbare und einbaufertige Einbaukomponente in Einzeldarstellung in Fig. 4 verdeutlicht ist. Die Heizgaszüge 1 erstrecken sich dabei im Taschenblock 2 quer, d.h. senkrecht zur zylindrisch ausgebildeten Brennkammer 4 in Form von Zugtaschen 5. Die Anschlußränder 6 des Blockes 2 sind an die Anschlußränder 7 einerseits einer teilzylindrischen Brennkammeranschlußöffnung 8 und andererseits an die Anschlußränder 7′ der Kondensatsammelkammer-Anschlußöffnung 9 angepaßt ausgebildet, was bedeutet, daß der gesamte Taschenblock 2 mit seinen Zugtaschen 5 bzw. Heizgaszügen 1 en bloc einerseits an die Brennkammer 4 und andererseits an die Kondensatsammelkammer 16 angeschlossen werden kann. Die Einzelbleche für die Ausbildung der Zugtaschen 5 sind dabei anschlußseitig zur Brennkammer 4 kreisbogenförmig entsprechemd dem Radius der Brennkammer zugeschnitten, so daß sich ein entsprechend teilzylindrischer Anschluß des Blockes an die Brennkammer 4 ergibt, wie dies aus den Fig. 1, 2 ersichtlich ist. Da die Bleche zur Ausbildung des Taschenblockes 2 sowieso einer Prägeverformung bedürfen, werden die Wände 10 der Zugtaschen 5 dabei gleichzeitig in bekannter Weise mit nach innen gerichteten Rippen- bzw. Wellenprägungen 11 versehen, die einerseits die wirksame Wärmeübertragungsfläche vergrößern und andererseits zur Druckstabilität der Taschen beitragen. Die Wellenprägungen benachbarter Wände können dabei ohne weiteres entgegengesetzt gerichtet sein. Außerdem werden die Wandungen der Zugtaschen 5 in sich vorteilhaft durch vertikale und nach innen gerichtete Längsprägungen 12 in mehrere Einzelzüge 1′ gegliedert, wie dies aus Fig. 3·deutlich wird.

Die beiden Komponenten, nämlich Taschenblock 2 und Brennkammer 4, sitzen, wie dargestellt, auf der Kondensatsammelkammer 16 und befinden sich innerhalb des wasserführenden Gehäuses 15, das hinsichtlich einer vorteilhaften Fertigung derart ausgebildet ist, daß sowohl der insgesamt den quaderförmigen Taschenblock 2 umgebende Teil 13 als auch der die Brennkammer 4 umgebende Teil 14 des wasserführenden Gehäuses 15 in Form von Zylindern 17 ausgebildet sind, deren Anschlußränder 18 entsprechend der Durchdringungslinie 18′ der beiden Zylinder 17 verlaufen, längs die Zylinder flüssigkeitsdicht miteinander verbunden sind.

Die Wellenprägungen 5 müssen übrigens nicht zwingend, wie dargestellt, gegeneinander anliegen, wohl aber die Längsprägungen 12, um Einzelzugkanäle zu bilden.

## Patentansprüche

1. Kondensatheizkessel, bestehend aus einem wasserführenden Gehäuse (15) mit im Oberteil angeordneter, im wesentlichen horizontal orientierter Brennkammer (4), von der taschenartige Heizgaszüge (1) zur unter dem wasserführenden Gehäuse angeordneten Kondensatsammelkammer (16) geführt sind, **dadurch gekennzeichnet,** daß die Heizgaszüge (1) in Form eines Taschenblockes (2) mit sich quer zur Längsachse (3) der zylindrisch ausgebildeten Brennkammer (4) erstreckenden Zugtaschen (5) ausgebildet sind und daß die Anschlußränder (6) des Blockes (2) an die Anschlußränder (7) einerseits einer den Gesamtquerschnitt des Blockes (2) entsprechenden teilzylindrischen Brennkammeröffnung (8) der Brennkammer (4) und andererseits an die Anschlußränder (7′) einer ebenen Kondensatsammelkammeranschlußöffnung (9) angepaßt ausgebildet und mit diesen Rändern (7, 7′) flüssigkeitsdicht verbunden sind.

2. Kondensatheizkessel nach Anspruch 1, **dadurch gekennzeichnet,** daß die Wände (10) der Zugtaschen (5) in bekannter Weise mit nach innen gerichteten Rippen- bzw. Wellenprägungen (11) versehen sind.

3. Kondensatheizkessel nach Anspruch 1 oder 2, **dadurch gekennzeichnet,** daß die Zugtaschen (5) des Taschenblockes (2) in sich durch vertikale und nach innen gerichtete Längsprägungen (12) in mehrere Einzelzüge (11) gegliedert sind.

4. Kondensatheizkessel nach einem der Ansprüche 1 bis 3, **dadurch gekennzeichnet,** daß sowohl der den insgesamt quaderförmigen Taschenblock (2) umgebende Teil (13) als auch der die Brennkammer (4) um gebende Teil (14) des wasserführenden Gehäuses (15) in Form von Zylindern ausgebildet und diese längs ihrer die Anschlußränder bildenden Druchdringungslinie (18′) miteinander verbunden sind.

## Claims

1. Condensate boiler, consisting of a water-carrying housing (15) having a substantially horizontally oriented combustion chamber (4) arranged in the upper part, from which slot-like heating gas flues (1) run to the condensate collecting chamber (16) disposed under the water-carrying housing, characterised in that the heating gas flues (1) are constructed in the form of a block (2) of slots with flue slots (5) extending transversely with respect to the longitudinal axis (3) of the cylindrically shaped combustion chamber (4), and the connecting edges (6) of the block (2) are designed to fit, on the one hand, the connecting edges (7) of a part-cylindrical combustion chamber opening (8) in the combustion chamber, this opening (8) corresponding to the overall cross section of the block (2) and, on the other hand, the connecting edges (7') of a flat connection opening (9) in the condensate collecting chamber and are connected to these edges (7, 7') in fluidtight manner.

2. Condensate boiler according to claim 1, characterised in that the walls (10) of the flue slots (5) are provided, in known manner, with inwardly directed stamped ribs or corrugations (11).

3. Condensate boiler according to claim 1 or 2, characterised in that the flue slots (5) of the block (2) are subdivided into a plurality of individual flues (11) by vertical and inwardly directed longitudinal stamped portions (12).

4. Condensate boiler according to one of claims 1 to 3, characterised in that both the part (13) surrounding the box-shaped block (2) and also the part (14) of the water-carrying housing (15) surrounding the combustion chamber (4) are constructed as cylinders and are joined together along the line of intersection (18') which forms the connecting edges.

## Revendications

1. Chaudière à condensation, composée d'un carter de circulation de l'eau (15), avec une chambre de combustion (4) orientée sensiblement en direction horizontale et agencée dans la partie supérieure, et à partir de laquelle s'étendent des carneaux de gaz chauds (1) en forme de puits, jusqu'à la chambre de collecte des condensats (16) agencée sous le carter de circulation d'eau, caractérisée en ce que les carneaux des gaz chauds (1) sont réalisés sous la forme d'un bloc (2) de puits de circulation des gaz, avec des carneaux en forme de puits (5) s'étendant transversalement à l'axe longitudinal (3) de la chambre de combustion (4) de forme cylindrique, et en ce que les bords de raccordement (6) du bloc (2), sont conçus de manière à être adaptés, d'une part, aux bords de raccordement (7) d'une ouverture (8) de la chambre de combustion (4), en forme de secteur de cylindre et correspondant à la section transversale globale du bloc (2), et d'autre part aux bords de raccordement (7') d'une ouverture de raccordement plane (9) de la chambre de collecte des condensats, les bords (6) étant reliés aux bords (7, 7') de manière étanche aux fluides.

2. Chaudière à condensation selon la revendication 1, caractérisée en ce que les parois (10) des carneaux en forme de puits (5), sont pourvues, de manière connue, de nervures ou d'ondulations matricées (11) dirigées vers l'intérieur.

3. Chaudière à condensation selon la revendication 1 ou 2, caractérisée en ce que les carneaux en forme de puits (5) du bloc de puits de circulation des gaz (2), sont subdivisés en plusieurs carneaux individuels (1'), par l'intermédiaire de matriçages longitudinaux (12) de direction verticale et dirigés vers l'intérieur.

4. Chaudière à condensation selon l'une des revendications 1 à 3, caractérisée en ce que aussi bien la partie (13) du carter de circulation d'eau (15), entourant le bloc de puits de circulation des gaz (12) présentant une forme globale de parallélépipède, que la partie (14) entourant la chambre de combustion (4), sont réalisées sous la forme de cylindres reliés entre-eux le long de leur ligne d'intersection (18') constituant les bords de raccordement.

Fig.1

Fig.2

EP 0 230 594 B1

Fig.3

Fig.4